# EUROPÄISCHE PATENTSCHRIFT

(11) **EP 0 466 877 B1**
(45) Veröffentlichungstag und Bekanntmachung des Hinweises auf die Patenterteilung: **30.11.1994**
(21) Anmeldenummer: 91903265.6
(22) Anmeldetag: 05.02.1991
(51) Int. Cl.: A62D 3/00, B09B 3/00, C04B 18/04

(54) **VERFAHREN ZUR UMWELTNEUTRALEN BESEITIGUNG VON FESTEN, FLÜSSIGEN UND/ODER GASFÖRMIGEN SCHADSTOFFEN, BEI TEMPERATUREM VON 400-1800 GRAD CELSIUS**
PROCESS FOR ENVIRONMENTALLY SAFE DISPOSAL OF NOXIOUS SOLID, LIQUIDAND/OR GASEOUS SUBSTANCES AT TEMPERATURES OF 400 TO 1800 DEGREES CELSIUS
PROCEDE D'ELIMINATION, SANS DANGER POUR L'ENVIRONNEMENT, DE MATIERES POLLUANTES SOLIDES, LIQUIDES ET/OU GAZEUSES, A DES TEMPERATURES DE 400 A 1800 DEGRES CELSIUS

(30) Priorität: 07.02.1990 AT 258/90
(43) Veröffentlichungstag der Anmeldung: 22.01.1992
(73) Patentinhaber: Strauch, Gerhard, A-1040 Wien (AT)
(72) Erfinder: Strauch, Gerhard, A-1040 Wien (AT)
(86) Internationale Anmeldenummer: AT9100018
(87) Internationale Veröffentlichungsnummer: WO9112052

(56) Entgegenhaltungen:
- EP-A- 0 170 212
- EP-A- 0 186 224
- EP-A- 0 314 971
- WO-A-87/06163
- DE-A- 3 528 054
- DE-A- 3 603 080

## Beschreibung

Es ist seit langem üblich bei der Erzeugung von keramischen Gefäßen Ziegein, Kacheln u.ä. in die formbare Masse (Ton, Kaolin, etc.) verschiedene anorganische und/oder organische Stoffe einzukneten, um bestimmte Eigenschaften des Endproduktes zu erreichen.

Es ist weiters bekannt, daß das Wasser zur Formgebung der keramischen Masse auch durch Öle, Emulsionen, Glyzerin u.a. Flüssigkeiten teilweise oder auch gänzlich ersetzt werden kann.

Es ist auch bekannt, daß bestimmte Gase beim Brennen mit der keramischen Masse reagieren und zum Teil oder auch zur Gänze in das molekulare Gefüge der Keramik eingebunden werden. So beim reduzierten Brand, bei den Anflugglasuren (Salzglasuren) und Reduktionsglasuren.

Es ist weiters bekannt, daß gebrannte keramische Produkte im hohen Maße widerstandsfähig gegen Verwitterung, säure- und basenfest, also umweltneutral sind.

Erfindungsgemäß sollen diese Voraussetzungen zur systematischen Beseitigung von Schadstoffen verwendet werden.

### 1.)

Viele Sonderabfälle ließen sich als Zuschlagstoffe sinnvoll verwerten. Da es in jedem einzelnen Fall einer besonderen Rezeptur bedarf, ausgehend von der Wahl des Grundmaterials (Lehm, Steinzeugmasse oder Kaolin), die Bestimmung der Brenntemperatur und die Art des Brandes (reduzierend oder oxydierend), eignen sich nur Abfälle, die in immer annähernd gleicher Qualität angeliefert werden können. Da viele dieser Stoffe beim Brennen schädliche Gase entwickeln, muß die gesamte Prozedur (einkneten, formen, trocknen und brennen) in einem hermetisch verschlossenen System vollautomatisch erfolgen und die Abgase in der bei Sondermüll üblichen Weise gereinigt werden. Feste Rückstände, außer den verwertbaren Endprodukten, gibt es nicht. Das Endprodukt ist je nach Ausformung z.B. als Ziegel, Fliesen, Rohre, Gefäß, etc. bedenkenlos verwendbar, da es sich wie alle keramischen Produkte als umweltneutral erweist. Nach dem erfindungsgemäßen Verfahren lassen sich auch viele verunreinigte Stoffe verarbeiten.
Zum Beispiel:
- anorganische: Schlacken, Aschen, Schleifschmante, verbrauchter Strahlsand, Ofenausbrüche, Schamotte, etc.
- organische: Schlamm aus Zuckerherstellung, Brauereien, Essigherstellung, etc. Tierische Fäkalien, Gerberschlamm, etc. Verunreinigtes Sägemehl, Plastikstaub, Lackreste und anderes.

Da bekannt ist, daß das Wasser zur Formbarmachung der Keramikmasse auch durch Öl und/oder Emulsion ersetzt werden kann, sind auch viele anorganische Flüssigkeiten, organische Öle und Emulsionen erfindungsgemäß verwertbar.

### 2.)

Dieses Verfahren ist auch dann sinnvoll, wenn der eingebrachte organische Abfallstoff anfänglich lediglich in der Tonmasse verbrennt, da die entstehenden Rauchgase bei Sintertemperaturen zur Gänze oder zum Teil in das Molekulargefüge des Endproduktes aufgenommen werden. Da für die Dioxin- und Furanbildung bei 300 °C die günstigsten Bedingungen vorliegen, diese Verbindungen aber aufgrund der katalytischen Wirkung der Aluminium- Silikatverbindungen bei 500 - 800 °C zerfallen, sollte das Brenngut so schnell wie möglich auf Sintertemperatur gebracht werden, um die Zerfallsprodukte ganz oder zum Teil an die Aluminium-Silikatmasse molekular zu binden. Man muß daher mit Produktschäden wie Reißen, Verformen und Ausblühen, etc. rechnen. Das Endprodukt ist aber umweltneutral und als Schüttgut verwendbar.

Diese Methode ist anderen deshalb überlegen, weil:
- Die Schadstoffe nicht wie in vielen Fällen bei herkömmlichen Verfestigungsverfahren z.B. mit Wasserglas, Puzzolan, Gips, Thermoplast und Zement nur umhüllt, eingeschlossen oder ummantelt werden. Es entsteht ein neues, irreversibles Molekulargefüge, nach dem Beispiel aus Lehm wird durch Brennen Ziegel, also ein "mineralisiertes" Produkt.

Die Verfahren EP-A-0314971, WO-A-8706163, DE-A-3528054 und EP-A-0170212 arbeiten nur mit oxydierendem Brand. Es ist auch in den beschriebenen Anlagen ein reduzierender Brand nicht ohne weiteres möglich.

"Mineralisieren" heißt in der Biologie, die Endphase der Verrottung pflanzlicher und tierischer Stoffe. In der Chemie und Technik wird dieser Begriff noch nicht verwendet. Es würde von den negativ empfundenen Begriffen Abfall, Müll, Rückstand, Gift usw. wegführen und einer positiveren Bewertung Platz machen.

Der im englischen verwendete Begriff "solid as rock" ist nicht eng genug gefaßt, da es auch z.B. für Immobilisierung mit Zement verwendet wird, wobei gefährliche Stoffe, wie z.B. Dioxine, nicht zerstört, sondern nur eingeschlossen werden. Bei langzeitlichen Rißbildungen kommt es doch zur Schadstoffreisetzung. Bei einem mineralisierten Produkt sind die Schadstoffe mit anderen Stoffen in ein neues, irreversibles Molekulargefüge eingebunden.

Es soll für alle Methoden der Abfallverwertung, an deren Ende ein Produkt steht, das tatsächlich umweltindifferent ist, der Terminus "mineralisieren eingeführt werden. In der Folge wird vom "Mineralisierungsverfahren", "Mineralisierungsfabrik", usw. geschrieben.
- Das gegenständliche Verfahren hat den Vorteil, daß die Endprodukte (Ziegel, Rohre, industrielle Gefäße, Bau- und Schüttstoffe) in großen Mengen absetzbar sind.
- Erfindungsgemäß sollen gefährliche und schwer transportierbare Stoffe direkt am Ort ihrer Entstehung und ohne gefährliche Zwischenlagerung nach der Rezeptur des Mineralisierungswerkes in die keramische Masse eingeknetet werden. Dadurch wird das Risiko beim Transport ins Mineralisierungswerk wesentlich verringert, da im Katastrophenfall die Tonmasse leichter zu entsorgen ist als staubförmige oder flüssige Giftstoffe.
- Im wesentlichen müssen keine neuen Technologien angewendet werden.
- Die erforderlichen Rohstoffe sind leicht zu beschaffen.
- Eine keramische Mineralisierungsfabrik ist im Prinzip eine moderne Ziegelfabrik in der im hermetisch abgeschlossenen Raum alle Arbeiten von mechanischen Robotern ausgeführt und alle Abgase nach dem letzten Stand der Technik entsorgt werden. In diesem Verfahren muß zumindest die Hochtemperaturphase des Brandes ohne Sauerstoffzufuhr erfolgen, sodaß die glasurbildenden Stoffe im Rauchgas nach dem Prinzip der Anflugglasur an das Molekulargefüge der Aluminium-silikatischen Masse gebunden werden.
- Es ist bekannt, daß bei langsamer, gleichmäßiger Abkühlung keramischer Produkte eine höhere Festigkeit erlangt wird. Weiters ist bekannt, daß gut ausgebildete kristalline Strukturen weniger schnell verwittern. Deshalb soll erfindungsgemäß eine höhere Qualität des Produkts durch Einsatz von Wärmespeichern erreicht werden.
- Die Produkte lassen sich mit allen üblichen Techniken veredeln, z.B. glasieren, engobieren, beschichten, wenn dies nicht durch Rauchgas schon geschehen ist.
- Am sinnvollsten ist es, das Produkt in der Art des Steinzeuges mit einer Anflugglasur zu versehen. Da sich nicht nur Natriumchlorid, sondern auch sehr viele andere Salze zur Erzeugung solcher Glasuren eignen, können in den hermetisch abgeschlossenen Brennkammern eines Mineralisierungswerkes auch verunreinigte Salze und Salzgemische, vor allem auch salzige Filterrückstände, zum Glasieren verwendet werden.

### 3.)

Ein sehr einfaches Verfahren ist erfingungsgenmäß die "Mineralisierung mit heißem Kern". Dazu benötigt man nur Formen.

Verwendet werden kann diese Methode überall dort, wo heiße Schlacke, Asche oder sonstige Abfallprodukte **heiß** abgezogen werden oder für die Verwendung für dieses Verfahren erhitzt wurden. Diese Methode läßt sich auch in bestehenden Anlagen ohne große Umbauten anwenden. Erfindungsgemäß sollen die glühenden Abzüge nicht gelöscht, sondern heiß in folgender Weise zu Bauelementen verarbeitet werden:

### 〈A〉

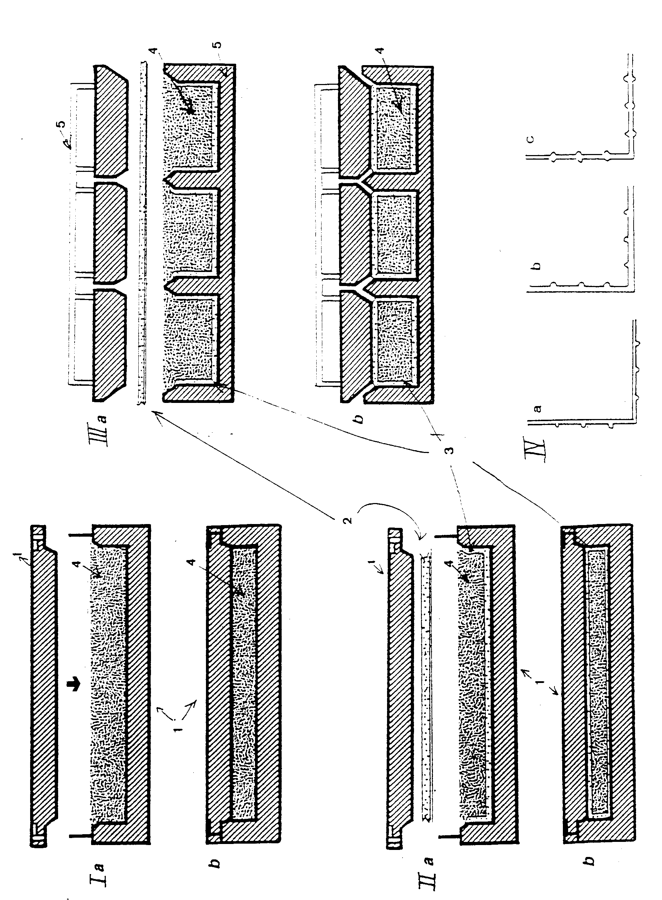

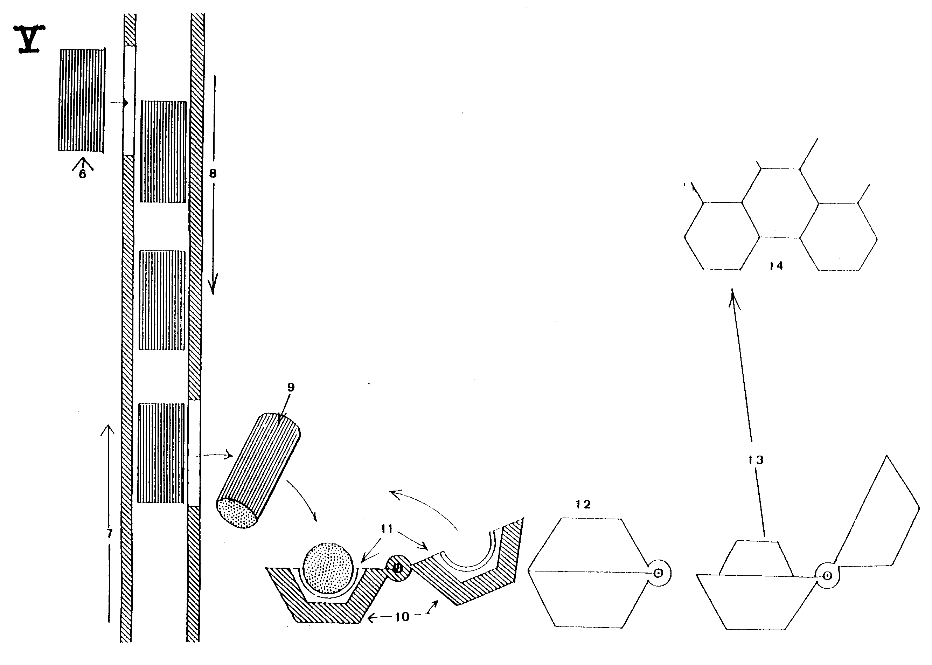

Zu Decken-, Boden- und Wandelementen im Fertigbau.
Siehe Abb.: I a, b + II a, b
Beschreibung der Abbildung
1 = Betonfertigteile / 2 brenn- oder schmelzbare Folie mit lederharter Keramikmasse / 3 = Auskleidung der unteren Formteile mit lederharter Keramikmasse / 4 = heiße Schlacke oder Asche.

Vorgefertigte Betonformen, die zusammengelegt einen Hohlraum umschließen, werden bereitgestellt. In dem wannenförmigen Unterteil wird heiße Schlacke eingebracht und mit dem Deckelbetonteil zugedeckt, wodurch die Schlacke gerade soviel gepreßt wird, daß größere Hohlräume vermieden werden.

Heißen Aschen und anderen Abzügen muß man nach Rezept Fluß- und Bindemittel beifügen, z.B. Glasbruch, Schleifschmant, glasige Bruchschlacke, Lehm, Flußspat, etc., damit sie gut zusammenbacken.

Durch Umlegen der herausragenden Baustahlenden werden die beiden Betonteile zusammgehalten und die Fugen vergossen. Nach Erkalten können die Elemente im Fertigteilbau verarbeitet oder als Bodenplatten von Parkplätzen, etc. verwendet werden.

Da Beton nicht unbegrenzt hitzebelastbar ist, sollten die Abzüge nicht zu heiß sein. Man kann sie durch Beigabe von kalter Altschlacke oder anderen Feststoffen abkühlen.

### 〈B〉

Erfindungsgemäß ist es sinnvoll, die Betonteile innen mit feuchtem Lehm zu beschichten, am besten in zwei Lagen: direkt am Beton > Lehm, darauf Lehm mit Bruchschlacke, um eine bessere Haftung des Schlackenkerns zu erreichen.

Neben dieser Methode, bei der der Schlackenkern **mit** der Betonform verbaut wird, kann man die Hitze der Schlacke dazu benützen, um in Formen Ziegel zu brennen.
Siehe Abb,: III a, b
5 = die Gußform, im Oberteil mit Gestänge
Auch bei diesem Verfahren benötigt man keine Brennöfen.

### 〈C〉 Aus zwei Teilen bestehende Gußformen, aus Gußeisen, die mit Graphit, Quarzmehl, o.ä. gestaubt sind und in denen ein oder besser mehrere Großziegel ausgeformt werden können, werden bereitgestellt. Die untere Form ist mit einer oder mehreren Schichten lederfeuchtem Lehm ausgekleidet. In diese Form wird die heiße Schlacke abgezogen. Darüber wird eine auf einer schmelz- oder brennbaren Metall- oder anderen Folie (Papier, Plastik, etc.) aufgebrachte lederfeuchte Lehmschicht in gleicher Zusammensetzung wie in der unteren Form gebracht und sofort mit der Deckelform beschwert.

Durch das Gewicht des oberen Formteils wird der Ziegel ausgeformt und der Schlackenkern etwas verdichtet. Die gefüllten Formen werden in einem Wärmespeicher so lange belassen, bis der Ziegel richtig gebrannt ist. Dann kann er herausgehoben und die Form neuerlich verwendet werden. Die Ziegel weiter im Wärmespeicher langsam abkühlen lassen. Zu beachten ist, daß die Lehmschicht nur so dick ist, daß sie gut ausbrennen kann. Der Ziegel wird nur durch die Hitze des Schlackenkerns gebacken und ist daher innen um die Schlacke gesintert und außen porös wie ein normaler Ziegel.

### 〈D〉

Die Ränder der Formen sind so gestaltet, daß beim Übereinanderlegen Spalten frei bleiben, aus denen die Luft, die Schlackengase und der aus dem Lehm freiwerdende Wasserdampf entweichen können und - da der Ziegel in der Folge beim Brand schwindet - Luft zwischen Form und Ziegel eindringen kann.

Das kann durch Ausnehmungen in einem Formteil oder bei beiden Teilen, sodaß sich jeweils zwei Ausnehmungen ergänzen, erreicht werden.
Siehe Abb.: IV
Eine Ecke der Formen von oben gesehen (schematisch):
a: in der unteren Form / b : in der oberen Form /
c: in beiden.
Bei Aschen, Schlacken und eventuell anderen auf die nötige Hitze gebrachte Materialien mit weniger glasigen Bestandteilen muß man, um gute Ziegel zu bekommen, wie bereits erwähnt, Zuschlagstoffe beimengen.

### 〈E〉

Nach obigen Methoden kann man auch in vulkanischen Gebieten in einfacher Weise nur mit Formen heißen Lavafluß und heißes Tuffgestein zu Ziegeln brennen.

### 4.)

Alle in den oben beschriebenen Verfahren nicht sinnvoll verwendeten Materialien sollten, ebenso wie Hausmüll, Hochtemperaturverbrennungsanlagen zugeführt werden, wo die Rauchgase erfindungsgemäß durch das Hochtemperatur-Staubkammerverfahren gereinigt werden.

Um das hohe Aufnahmevermögen von Silizium- und Aluminiumverbindungen auch für die Hochtemperaturverbrennung von Sonderabfall und Hausmüll zu nützen, soll erfindungsgemäß unmittelbar nach der Brennkammer eine Staubkammer angeschlossen werden, in die Lehmstaub, Kaolin oder ein feinkörniges Massegranulat eingebracht wird.

Die Temperatur in der Kammer muß jedoch über der Brenntemperatur von Ziegelton liegen und den Rauchgasen sollte kein Sauerstoff (Luft) zugeführt werden. In diesem Klima würde sich das einzelne Staubkorn so verhalten wie ein Steinzeuggefäß bei reduziertem Brand; es würde begierig alle Metalle und Metallverbindungen in seiner unmittelbaren Umgebung in sein Molekulargefüge einbauen. Aber auch Molekularfragmente aus der Verbrennung von organischen Stoffen werden zumindest zum Teil in die Keramikteilchen gebunden. Nach Durchlaufen einiger weiterer Prozeduren bleibt ein keramisches Puder, das man in der Materialkunde als "gebrannte Erde" (gehört zu den Erdfarben) bezeichnen könnte, zurück. Derartige Materialien sind als Farbstoffe (gebranntes Ocker, künstliches Sepia, Siena, Pista) seit altersher bekannt und werden vielfach auch als Füllstoffe, u.a. in der Papier- und Plastikindustrie, aber auch als hochwertiges Poliermitttel, etc., sehr häufig verwendet und sind auch als Betonfärbemittel verwendbar. Sie sind wasser-, säure- und basenfest, lichtecht und vorallem umweltindifferent.

Das Eindüsen des Staubes bzw. Massegranulates in die Staubkammer sollte erfindungsgemäß mit komprimiertem Rauchgas erfolgen, das nach der Rauchgaswäsche, aber noch vor dem Endfiltern entnommen und im Gegenstrom bis etwas unter die Brenntemperatur des Keramikmaterials erhitzt wird. Dadurch würden Materialkosten für andere geeignete neutrale Gase gespart.

Das Abgas in der Brennkammer sollte so heiß wie möglich sein, auf jeden Fall weit über der Brenntemperatur des eingebrachten Keramikmaterials liegen, da der Brand der Staubkörner einen erheblichen kalorischen Energieaufwand erfordert. Die Staubkammer sollte röhrenförmig sein und das Raugas-Staubgemisch in immer kühlere Zonen befördert werden. Schließlich, wenn die kritische Brenntemperatur unterschritten wird, sollte das Gemisch gleichzeitig mit Wasser in ein Druckrohr eingedüst werden. Der dabei plötzlich entstehende Klardampf leitet den Schlämmvorgang ein. Der hohe Druck kann mechanisch genutzt werden und endlich wird das Klardampf-, Rauchgas-Staubgemisch in eine Rauchgaswäsche eingeleitet. Das geschlämmte Keramikpuder kann der industriellen Verwertung zugeführt werden.

Da bei diesem Verfahren ein Teil der Rauchgase im heißen Zustand an feste Körper gebunden werden und dieser Aggregatzustand nicht mehr umkehrbar ist, kann es bei der Abkühlung des Rauchgases nicht mehr zur Bildung von gefährlichen Dioxinen und Furanen kommen. Außerdem werden die Rauchgaswäsche und Endfilter wesentlich entlastet.

### 5.)

Für schon bestehende Hochtemperaturverbrennungsanlagen oder Industrieanlagen mit Hochtemperaturabgasen, bei denen der Einbau einer Staubkammer nicht mehr möglich ist, soll erfindungsgemäß wie folgt verfahren werden:

In den Kamin unmittelbar nach der Brennkammer wird ein Lift eingebaut, mittels dessen man **ungebrannte,** keramische Filter entgegen der Rauchgasströmung herablassen kann. Die Filter sollten etwas strukturiert sein wie die Katalysatoren von Kraftwagen (unbeschichtet) und etwa den Querschnitt des Kamins haben.

Die Hitze der Rauchgase muß am oberen Eintrittstor der Filter noch über der Brenntemperatur der keramischen Masse liegen. Im Kamin sollten immer wenigstens drei Filter absinken. Der oberste, frische Filter hat die höchste Aufnahmefähigkeit, der unterste ist ausgebrannt, hält nur mehr mitgerissene Asche ab und wird nun heiß ausgeworfen und, wie in Punkt 3〈C〉 (Mineralisieren mit heißem Kern) geschildert, keramisch ummantelt
Siehe Abb.: V
6 = ungebrannter Filter / 7 = Rauchgasströmung / 8 = absenken der Filter /
9 = ausgebrannter Filter / 10 = Form /
11 = Auskleidung mit Lehm / 12 = brennen durch den heißen Kern /
13 = Transport zur / 14 =Deponie
Sinnvoll ist es, die zylindrische Form des Filters mit einem sechsseitigen, säulenförmigen Keramikmantel zu umgeben und so eine zwischenraumfreie und stabile Deponie zu ermöglichen.

Das Gesamtverfahren ist in Einzelprojekte teilbar. In einem Industriegebiet entsteht z.B. zuerst ein Mineralisierungswerk, dessen Kapazität vom Einzugsgebiet abhängig ist. Dieses Werk liefert auch das "know how" für die "Mineralisierung mit heißem Kern" und die Rezepturen für den massegeschützten Schadstofftransport und die Rauchgasfilterung mit ungebrannten Keramikfiltern. Dem Werk soll auch eine Hochtemperatur-Verbrennungsanlage mit Staubkammerverfahren angeschlosssen werden. Eine derartige Kombination würde die gefährlichen Schadstofftransporte auf ein Minimum reduzieren und das Deponieren vermeiden.

## Patentansprüche

1. Verfahren zur Konditionierung von flüssigen, festen und/ oder gasförmigen Schadstoffen, Sonderabfällen und Giften, dadurch gekennzeichnet, daß bei Temperaturen von 400 bis 1800 °C Schadstoffe ohne Sauerstoffzufuhr mit ungebrannter aluminiumsilikatischer Masse, Granulat oder Staub zusammengebracht, wobei die Schadstoffe zur Gänze oder teilweise irreversibel ins Molekulargefüge eingebunden werden und die notwendigen Verfahrensschritte wie mixen, kneten, formen, brennen und glasieren in einer hermetisch abgeschlossenen Keramikproduktionsstätte von Automaten gemacht werden oder Abgase nach demselben Prinzip mit Massegranulat und/oder aluminiumsilikatischen Teilchen in speziellen Kammern zusammengeführt werden, zum Zwecke der Rauchgasreinigung und der Erzeugung von umweltneutralen, keramischen Produkten.

2. Verfahren nach Anspruch 1 dadurch gekennzeichnet, daß in keramischen Massen feste und/oder flüssige Schadstoffe eingearbeitet, insbesondere eingeknetet werden und in der Masse hochtemperaturig verbrannt werden, wobei diese Stoffe in Folge der katalytischen Förderung des thermischen Zerfalls durch die Aluminiumsilikate keine gefährlichen Zwischenprodukte, z.B. Dioxine und Furane freisetzen und bei weiterer Temperaturerhöhung ohne Sauerstoffzufuhr zur Gänze oder zum Teil in das molekulare Gefüge der Keramik aufgenommen werden und daher das Endprodukt nach dem Brand nicht in Sonderdeponien gelagert werden muß.

3. Verfahren nach Anspruch 1 bis 2 dadurch gekennzeichnet, daß besonders giftige und/oder gefährliche Stoffe am Ort iher Entstehung in keramische Masse eingeknetet werden, um das Lager- und Transportrisiko zu senken.

4. Verfahren nach Anspruch 1 bis 3 dadurch gekennzeichnet, daß durch die Verwendung von Wärmespeichern eine höhere Qualität des Produktes erreicht wird.

5. Verfahren nach Anspruch 1 bis 4 dadurch gekennzeichnet, daß in dieser Anlage auch Salze, unreine Salze, Salzgemische und salzige Filterrückstände für Anflugglasuren verwendet werden können.

6. Verfahren nach Anspruch 1 dadurch gekennzeichnet, daß heiße Schlacken und/oder Aschen in speziellen Formen oder vorgefertigten Betonteilen, die zusammen einen Hohlraum umschließen und deren Wände mit ungebrannter Keramikmasse ausgekleidet sind, gebracht werden, wobei die Masse nur durch die Hitze des heißen Kerns gebrannt wird.

7. Verfahren nach Anspruch 1 und 6 dadurch gekennzeichnet, daß über der unteren Form und zwischen der heißen Schlacke und der oberen Form eine mit einer oder mehreren Lagen keramischer Masse beschichtete Folie aus brenn- oder schmelzbarem Material gebracht wird, die durch das Gewicht der oberen Form auf die Schlacke gepreßt wird.

8. Verfahren nach Anspruch 1, 6 und 7 dadurch gekennzeichnet, daß die Ränder der Form derart gestaltet sind, daß beim Aufeinanderlegen Spalten frei bleiben, und zwar so, daß die spalten entweder nur in einem Formteil sind oder sich die Ausnehmungen beider Formteile ergänzen

9. Verfahren nach Anspruch 1 und 6 bis 8 dadurch gekennzeichnet, daß heiße Schlacken, Aschen und/oder andere heiße Abzüge zur Verbesserung der Festigkeit des Kerns, Lehm und/oder Glasbruch, glasige Schlacken, Glas- und/oder Gesteinsschmant beigemischt wird.

10. Verfahren nach Anspruch 1 und 6 bis 9 dadurch gekennzeichnet, daß auch heiße Lava und/oder Tuffgestein verarbeitet werden kann.

11. Verfahren nach Anspruch 1 dadurch gekennzeichnet, daß zur Reinigung von heißen Gasen aus Verbrennungsanlagen und anderen heißen Gasen aus industriellen Verfahren, Lehm, Kaolin oder andere keramische Erden in Form von Staub- und/oder Massegranulaten in eine spezielle Staubkammer eingebracht werden.

12. Verfahren nach Anspruch 1 und 11 dadurch gekennzeichnet, daß komprimiertes Rauchgas zum Eindüsen von Staub, Granulat oder Flüssigkeiten in die Staubkammer verwendet wird.

13. Verfahren nach Anspruch 1, 11 und 12 dadurch gekennzeichnet, daß die zum Eindüsen verwendeten Rauchgase im Gegenstrom erwärmt werden.

14. Verfahren nach Anspruch 1 und 11 bis 13 dadurch gekennzeichnet, daß Wasser in das Rauchgas-Staub- oder Granulatgemisch zur Bildung von Klardampf zwecks Einleitung der Schlämmung eingedüst wird.

15. Verfahren nach Anspruch 1 dadurch gekennzeichnet, daß keramische ungebrannte Filter zur Reinigung heißer Rauchgase verwendet werden.

16. Verfahren nach Anspruch 1 und 15 dadurch gekennzeichnet, daß mehrere Filter entgegen der Rauchgasströmung abgesenkt werden.

17. Verfahren nach Anspruch 1, 15 und 16 dadurch gekennzeichnet, daß die ausgebrannten, ausgeworfenen, verbrauchten heißen Filter nach dem Verfahren laut Anspruch 6 ummantelt werden.

## Claims

1. A method to condition harmful liquid, solid or gaseous substances, special wastes and poisons wherein they are fired without provision of oxygen together with unfired bulk, granular or powdered aluminium silicate at temperatures between 400 and 1800°C so that these substances are completely or in part irreversibly bound into the molecular structure, whereby process stages such as mixing, blending, forming, firing and glazing may be undertaken in a hermetically sealed ceramic production facility by automatic systems, or following the same principles waste gases are brought together in special chambers with granular or particulate aluminium silicate for the purpose of cleansing flue gases, and thereby environmentally neutral ceramic products result.

2. Processes according to claim 1, wherein harmful solid and/or liquid wastes are worked into the ceramic bulk material, in particular by blending, and these substances are then fired with the bulk material at high temperature, whereby as result of the catalytic promotion of thermal dissociation by the aluminium silicate no dangerous intermediate products, e.g. dioxin and furan, are released, and wherein following a further increase in temperature without provision of oxygen the substances are completely or in part taken up in the molecular structure of the ceramic so that the end product of the firing does not have to be stored in a special waste tip or storage facility.

3. Processes according to any preceding claim, wherein particularly poisonous and/or dangerous substances are blended with the ceramic bulk material at their production site in order to reduce storage and transport risks.

4. Processes according to any preceding claim, wherein a higher quality product is obtained as a result of using a heat accumulator.

5. Processes according to any preceding claim, wherein salts, impure salts, salt mixtures and salt-containing filter residues can be used to produce salt glazes.

6. Processes according to claim 1, wherein hot clinker and/or slag and/or hot ash is/are introduced as core material into special moulds or pre-cast concrete elements which when assembled enclose a space whose enclosing walls are coated with unfired ceramic bulk material that is subsequently fired solely by the heat of the hot core material.

7. Processes according to claims 1 and 6, wherein burnable or meltable foil coated with one or more layers of ceramic bulk material is placed on the lower mould and between the hot slag and the upper mould so that the foil is pressed against the hot core by the weight of the upper mould.

8. Processes according to claims 1, 6 and 7, wherein the edges of the moulds are so designed that there are openings left free either in one of the moulds, or in both so that the openings in the two parts are complementary.

9. Processes according to claims 1 and 6 to 8, wherein clay, and/or crushed glass, slag, glass and/or stone cutting and polishing residues (fines) are added to the hot clinker, ash and/or other hot drosses in order to strengthen the core.

10. Processes according to claims 1 and 6 to 9, wherein hot lava or tuff can be used in the process.

11. Processes according to claim 1, wherein for the purpose of cleaning hot gases emanating from incinerators or from other industrial processes powdered or granulated clay, kaolin or other ceramic earths are introduced into a special mixing chamber [Staubkammer].

12. Processes according to claims 1 and 11, wherein flue gas under pressure is used to inject powder, granular material or liquids into a special mixing chamber.

13. Processes according to claims 1, 11 and 12, wherein the flue gas used for injection is heated by counter flow.

14. Processes according to claims 1, 11 to 13, wherein water is injected into the flue-gas/powder or flue-gas/granulate mixture in order to produce superheated steam to initiate elutriation.

15. Processes according to claim 1, wherein unfired ceramic filters are used to clean flue gases.

16. Processes according to claims 1 and 15, wherein several filters are lowered into position against the flue-gas stream.

17. Processes according to claims 1, 15 and 16, wherein the hot, discarded, now-fired and expended filters resulting from claims 15 and 16 are cased according to claim 6.

## Revendications

1. Procédé pour le conditionnement de toxiques, déchets spéciaux et poisons liquides, solides er gazeux identifiés du fait que sous des températures de 400 à 1800°C, sous l'adduction d'oxygène, rassemblés avec des masses, granulés ou poussières de silicate d'aluminium pendant que les toxiques sont fixés complètement ou en partie en texture moléculaire irréversible et les phases de procédé nécessaires comme mélanger, malaxer, former, cuire et glacer sont effectuées par des automates dans des centres de production de céramique hermétiquement fermés ou des gaz brulés sont réunis, selon le même principe, dans des chambres spéciales avec des granulés ou/et des particules de silicate d'aluminium avec pour but le nettoyage des fumées et la fabrication de produits à base de céramique neutres pour l'environnement.

2. Procédé selon revendication 1 identifié du fait que dans les masses de céramique des toxiques solides et/ou gazeux sont rassemblés, particulièrement malaxés et cuits dans la masse à haute température, pendant que ces toxiques suite à la production catalytique de la décomposition thermique par le silicate d'aluminium ne libèrent pas de produits intermédiaires comme par exemple dioxine ou furanne et qu'ils sont fixés lors d'autres augmentations de température sans adduction d'oxygène complètement ou en partie dans la texture moléculaire de la céramique et que par conséquent le produit final après la cuisson n'a pas à être entreposé dans une décharge spéciale.

3. Procédé selon revendication 1 identifié du fait que des substances particulièrement toxiques ou dangereuses sont malaxées à l'endroit de leur fabrication dans une masse céramique pour diminuer le risque de stockage et de transport.

4. Procédé selon revendications 1 à 3 identifié du fait que par l'utilisation de récupérateurs de chaleur est obtenue une meilleure qualité du produit.

5. Procédé selon revendications 1 à 4 identifié du fait que dans cette installation des sels, des sels impurs, des compositions salines et des résidus de filtrage peuvent être utilisés pour des "premières glaçures".

6. Procédé selon revendication 1 identifié du fait que des scories brûlantes ou/et des cendres sont amenés dans un moule spécial ou des éléments préfabriqués en béton, qui entourent une cavité et dont les parois sont revêtues d'une masse céramique, cette masse n'étant cuite que par la chaleur du noyau brûlant.

7. Procédé selon revendications 1 et 6 identifié du fait que sur le moule inférieur et entre des scories brûlantes et le moule supérieur est amenée une feuille enduite de matériel cuit ou fondu, pressée par le poids du moule inférieur.

8. Procédé selon revendications 1, 6 et 7 identifié du fait que les bords du moule sont réalisés de telle façon que lors de la pose de la partie supérieure sur la partie inférieure des interstices se trouvent dans une partie du moule ou ils se complètent dans les deux parties du moule.

9. Procédé selon revendications 1, 6 à 8 identifié du fait que des scories brûlantes, cendres et/ou autres résidus brûlants sont mélangés, pour l'amélioration de la dureté du noyau, à de l'argile ou/et des débris de verre, scories de glacure, poussières de verre et/ou de pierre.

10. Procédé selon revendications 1 et 6 à 9 identifié du fait que de la lave brûlante et/ou le tuf peuvent être travaillés.

11. Procédé selon revendication 1 identifié du fait que pour le nettoyage de gaz brûlants provenant des chambres de combustion ou de gaz brûlants provenant d'autres procédés industriels, argile, kaolin ou d'autres terres céramiques sont amenés sous la forme de poussière et/ou granulés dans une chambre spéciale à poussières.

12. Procédé selon revendications 1 et 11 identifié du fait que du gaz comprimé est utilisé pour la pulvérisation de poussières, granulés ou liquides dans la chambre à poussières.

13. Procédé selon revendications 1, 11 et 12 identifié du fait que les gaz utilisés pour la pulvérisation sont réchauffés dans le contre-flux.

14. Procédé selon revendications 1, 11 et 13 identifié du fait que de l'eau est pulvérisée dans la poussière du gaz ou d'un mélange de granulés pour la formation de vapeur claire pour l'introduction de la décomptation.

15. Procédé selon revendication 1 identifié du fait que des filtres céramiques non cuits sont utilisés pour le nettoyage de gaz brûlants.

16. Procédé selon revendications 1 et 15 identifié du fait que plusieurs filtres sont descendus contre le flux de gaz.

17. Procédé selon revendications 1, 15 et 16 identifié du fait que les filtres brûlants, cuits, rejetés, utilisés sont enrobés selon le procédé revendication 6.
